# EUROPÄISCHE PATENTSCHRIFT

(11) **EP 3 541 575 B1**
(45) Veröffentlichungstag und Bekanntmachung des Hinweises auf die Patenterteilung: **05.01.2022**
(21) Anmeldenummer: 17794344.6
(22) Anmeldetag: 09.11.2017
(51) Int. Cl.: B25C 1/06

(54) **SCHWUNGRADANGETRIEBENES SETZGERÄT**
FLYWHEEL-DRIVEN SETTING TOOL
APPAREIL DE POSE ENTRAÎNÉ PAR VOLANT D'INERTIE

(30) Priorität: 18.11.2016 EP 16199458
(43) Veröffentlichungstag der Anmeldung: 25.09.2019
(73) Patentinhaber: Hilti Aktiengesellschaft, 9494 Schaan (LI)
(72) Erfinder: SCHMIDT, Dominik, 6800 Feldkirch (AT); DITTRICH, Tilo, 6800 Feldkirch (AT); THON, Raphael, 2700 Wiener Neustadt (AT)
(74) Vertreter: Hilti Aktiengesellschaft Corporate Intellectual Property
(86) Internationale Anmeldenummer: PCT/EP2017/078704
(87) Internationale Veröffentlichungsnummer: WO 2018/091343

(56) Entgegenhaltungen:
- EP-A1- 1 932 624
- GB-A- 2 150 653
- US-A1- 2009 032 566
- US-A1- 2012 097 729

## Beschreibung

### Technisches Gebiet

Die Erfindung betrifft ein schwungradangetriebenes Setzgerät mit einem Schwungrad, das antriebsmäßig mit einem Eintreibelement verbindbar ist, um bei einem Setzvorgang mit dem Eintreibelement ein Setzelement in einen Untergrund einzutreiben.

### Stand der Technik

Aus der taiwanesischen Zusammenfassung TW 201134616 A ist ein schwungradangetriebenes Setzgerät mit einem zweilagigen Schwungrad bekannt. Aus den amerikanischen Offenlegungsschriften US 2009/0194573 A1 und US 2012/0097729 A1 sind schwungradangetriebene Setzgeräte bekannt, bei denen das Schwungrad in Umfangsrichtung V-Nuten aufweist, wobei ein Setzkolben des Setzgeräts V-förmige Nut-Gegenteile aufweist.

### Darstellung der Erfindung

Aufgabe der Erfindung ist es, ein schwungradangetriebenes Setzgerät mit einem Schwungrad, das antriebsmäßig mit einem Eintreibelement verbindbar ist, um bei einem Setzvorgang mit dem Eintreibelement ein Setzelement in einen Untergrund einzutreiben, zu schaffen, das im Betrieb einen geringen Verschleiß aufweist.

Die Aufgabe ist bei einem schwungradangetriebenen Setzgerät nach Anspruch 1 gelöst.

Bei dem schwungradangetriebenen Setzgerät handelt es sich vorzugsweise um ein handgeführtes Setzgerät, das auch als Setzwerkzeug bezeichnet wird. Bei den Setzelementen oder Befestigungselementen handelt es sich zum Beispiel um Nägel oder Bolzen, die mit Hilfe des Setzgeräts, das auch als Setzwerkzeug bezeichnet wird, in den Untergrund eingetrieben werden. Die Setzenergie wird vorteilhaft über einen Elektromotor bereitgestellt und über das Schwungrad auf das Eintreibelement, das auch als Setzkolben bezeichnet wird, übertragen. Zu diesem Zweck wird das Schwungrad über den Elektromotor in Rotation versetzt. Die Rotationsenergie des Schwungrads wird für einen Setzvorgang auf das Eintreibelement, insbesondere den Setzkolben, der verkürzt auch als Kolben bezeichnet wird, übertragen. Mit Hilfe des Eintreibelements, insbesondere des Kolbens, wird das Befestigungselement in den Untergrund eingetrieben. Zum Übertragen der Rotationsenergie von dem Schwungrad auf das Eintreibelement wird das Schwungrad, zum Beispiel mit Hilfe einer geeigneten Kupplungseinrichtung, zunächst reibschlüssig mit dem Eintreibelement verbunden. Zu diesem Zweck kann das Eintreibelement zwischen dem Schwungrad und einer Gegenrolle angeordnet sein. Das Eintreibelement kann einteilig oder mehrteilig ausgeführt sein. Der Begriff axial bezieht sich auf eine Drehachse des Schwungrads. Axial bedeutet in Richtung oder parallel zur Drehachse des Schwungrads. Das Schwungrad kann zum Beispiel in drei oder vier Schwungradteilkörper unterteilt sein. Die Schwungradteilkörper sind im Wesentlichen kreisringscheibenartig ausgeführt. Bei im Rahmen der vorliegenden Erfindung durchgeführten Versuchen und Untersuchungen hat sich herausgestellt, dass eine Passung zwischen Schwungrad und Eintreibelement bei der Anwendung von mehr als einer V-Nut überbestimmt ist. Das kann dazu führen, dass nicht alle Flankenseiten der Nutflanken der V-Nuten gleichzeitig an der Reibpaarung beteiligt sind. Das kann zu einem unerwünscht hohen Verschleiß am Eintreibelement oder am Schwungrad führen, da weniger Fläche für die Reibpaarung zur Verfügung steht. Darüber hinaus schwankt eine Kupplungseffizienz über die Produktlebensdauer des Setzgeräts, da Einschleif- und Abnutzungseffekte auftreten. Letztendlich resultiert diese Schwankung in einer Variation der Setzenergie und führt damit zu einer unerwünschten Unberechenbarkeit der Setzqualität im Betrieb des Setzgeräts. Durch die Unterteilung des Schwungrads in mindestens zwei Schwungradteilkörper kann der Verschleiß beim Herstellen des Reibschlusses zwischen Eintreibelement und Schwungrad deutlich reduziert werden. Darüber hinaus ermöglichen die mindestens zwei Schwungradteilkörper die Darstellung einer konstanten Reibpaarung zwischen Eintreibelement und Schwungrad.

Das schwungradangetriebene Setzgerät ist dadurch gekennzeichnet, dass die Schwungradteilkörper jeweils mindestens eine Reibeschlussgeometrie umfassen, die zur Darstellung eines Reibschlusses zwischen dem Schwungrad und dem Eintreibelement reibschlüssig mit einer komplementären Reibschlussgeometrie des Eintreibelements verbindbar sind. Über eine axiale Verlagerung der Schwungradteilkörper relativ zueinander können fertigungsbedingte Toleranzen sowie ein im Betrieb auftretender Verschleiß der Reibpaarung ausgeglichen werden. Darüber hinaus wird auf einfache Art und Weise eine konstante Kraftübertragung über die gesamte Lebensdauer des Setzgeräts sichergestellt.

Ein weiteres bevorzugtes Ausführungsbeispiel des schwungradangetriebenen Setzgeräts ist dadurch gekennzeichnet, dass die Reibschlussgeometrie eine im Wesentlichen V-förmige Nut umfasst, die reibschlüssig mit einem komplementären Gegenkörper des Eintreibelements verbindbar ist. Das in mehrere Teilkörper unterteilte Schwungrad umfasst vorteilhaft mehrere V-Nuten. So können beispielsweise mindestens drei V-Nuten genutzt werden, wenn das Schwungrad aus drei Schwungradteilkörpern zusammengesetzt ist. Mehr V-Nuten bedeuten eine größere Kupplungsfläche oder Reibschlussfläche und dadurch einen geringeren Verschleiß pro Kupplungsflanke oder Nutflanke. Eine unerwünschte Überbestimmtheit des Reibschlusssystems wird durch die axiale Verlagerbarkeit der Schwungradteilkörper relativ zueinander sicher verhindert. Dadurch kann die Lebensdauer des Setzgeräts signifikant verlängert werden. Die komplementären Gegenkörper des Eintreibelements haben zum Beispiel die Gestalt von Rippen mit einem im Wesentlichen V-förmigen Rippenquerschnitt.

Ein weiteres bevorzugtes Ausführungsbeispiel des schwungradangetriebenen Setzgeräts ist dadurch gekennzeichnet, dass die Schwungradteilkörper zwei Hälften des Schwungrads sind. Gemäß einem Ausführungsbeispiel hat es sich als ausreichend erwiesen, wenn das Schwungrad genau in zwei Hälften unterteilt ist. Dadurch wird auf einfache Art und Weise eine symmetrische Belastung im Betrieb des Schwungrads sichergestellt.

Ein weiteres bevorzugtes Ausführungsbeispiel des schwungradangetriebenen Setzgeräts ist dadurch gekennzeichnet, dass die Schwungradteilkörper durch mindestens eine Federeinrichtung voneinander weg vorgespannt sind. Die Schwungradteilkörper sind durch die Federeinrichtung axial vorzugsweise so voneinander weg vorgespannt, dass eine geringe axiale Bewegung der Schwungradteilkörper relativ zueinander ermöglicht wird. Dadurch kann der gewünschte Ausgleich von Fertigungstoleranzen im Betrieb des Setzgeräts sichergestellt werden. Bei der Federeinrichtung handelt es sich zum Beispiel um mindestens eine Tellerfeder.

Ein weiteres bevorzugtes Ausführungsbeispiel des schwungradangetriebenen Setzgeräts ist dadurch gekennzeichnet, dass die voneinander weg vorgespannten Schwungradteilkörper in axialer Richtung durch eine Halteeinrichtung zusammengehalten werden. Dadurch wird auf einfache Art und Weise ein unerwünschtes Lösen der Schwungradteilkörper voneinander sichergestellt. Bei der Halteeinrichtung handelt es sich zum Beispiel um eine Bundhülse mit einem Bund, der einen ersten axialen Anschlag darstellt. Ein zweiter axialer Anschlag wird zum Beispiel von einer Gewindemutter dargestellt, die auf ein dem Bund abgewandtes Ende der Bundhülse aufgeschraubt wird. Beide Schwungradteilkörper sind zusammen mit der dazwischen angeordneten Federeinrichtung zwischen den beiden axialen Anschlägen der Halteeinrichtung angeordnet.

Ein weiteres bevorzugtes Ausführungsbeispiel des schwungradangetriebenen Setzgeräts ist dadurch gekennzeichnet, dass die Schwungradteilkörper durch Kopplungselemente, insbesondere Kopplungsstifte, drehfest, aber axial verlagerbar miteinander verbunden sind. Die Kopplungselemente sind vorteilhaft über einen Umfang der Schwungradteilkörper gleichmäßig verteilt angeordnet. Die Kopplungselemente, insbesondere Kopplungsstifte, sind vorteilhaft in entsprechenden Ausnehmungen der Schwungradteilkörper aufgenommen beziehungsweise geführt. Die Ausnehmungen können als Sacklöcher in den Schwungradteilkörpern ausgeführt sein.

Die oben angegebene Aufgabe ist bei einem schwungradangetriebenen Setzgerät mit einem Schwungrad, das antriebsmäßig mit einem Eintreibelement verbindbar ist, um bei einem Setzvorgang mit dem Eintreibelement ein Setzelement in einen Untergrund einzutreiben, zusätzlich dadurch gelöst, dass das Eintreibelement in mindestens zwei Eintreibelementteilkörper unterteilt ist, die in einer axialen Richtung relativ zueinander begrenzt verlagerbar sind. Dabei ist jeder Eintreibelementteilkörper vorteilhaft mit einer komplementären Reibschlussgeometrie ausgestattet, insbesondere einem komplementären Gegenkörper. Der Begriff axial bezieht sich auf die Drehachse des Schwungrads. Mit dem unterteilten Eintreibelement kann vorteilhaft der gleiche Effekt erzielt werden wie mit dem unterteilten Schwungrad, das vorab beschrieben ist.

Die oben angegebene Aufgabe ist bei einem schwungradangetriebenen Setzgerät mit einem Schwungrad, das antriebsmäßig mit einem Eintreibelement verbindbar ist, um bei einem Setzvorgang mit dem Eintreibelement ein Setzelement in einen Untergrund einzutreiben, zusätzlich dadurch gelöst, dass das Eintreibelement mindestens zwei komplementäre Reibschlussgeometrien aufweist, die in einer axialen Richtung relativ zueinander begrenzt verlagerbar sind. Der Begriff axial bezieht sich ebenfalls auf die Drehachse des Schwungrads. Bei den komplementären Reibschlussgeometrien handelt es sich vorzugsweise um im Wesentlichen V-förmige Gegenkörper, wie sie vorab beschrieben sind. Die Reibschlussgeometrien, insbesondere die V-förmigen Gegenkörper, können zum Beispiel als Einlegeteile ausgeführt sein, die relativ zu dem Eintreibelement in axialer Richtung begrenzt verlagerbar sind. Durch Federeinrichtungen können die Reibschlussgeometrien in axialer Richtung vorgespannt sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine vereinfachte Darstellung eines schwungradangetriebenen Setzgeräts mit einem Schwungrad, das vor einer Kupplungsauslösung von einem Eintreibelement beabstandet ist;
Figur 2 das Setzgerät aus Figur 1, wobei das Eintreibelement reibschlüssig mit dem Schwungrad verbunden ist;
Figur 3 eine perspektivische Darstellung eines unterteilten Schwungrads mit einem Eintreibelement;
Figur 4 eine Querschnittsansicht des Schwungrads mit dem Eintreibelement aus Figur 3;
Figur 5 die Ansicht eines Längsschnitts durch das Schwungrad mit dem Eintreibelement aus

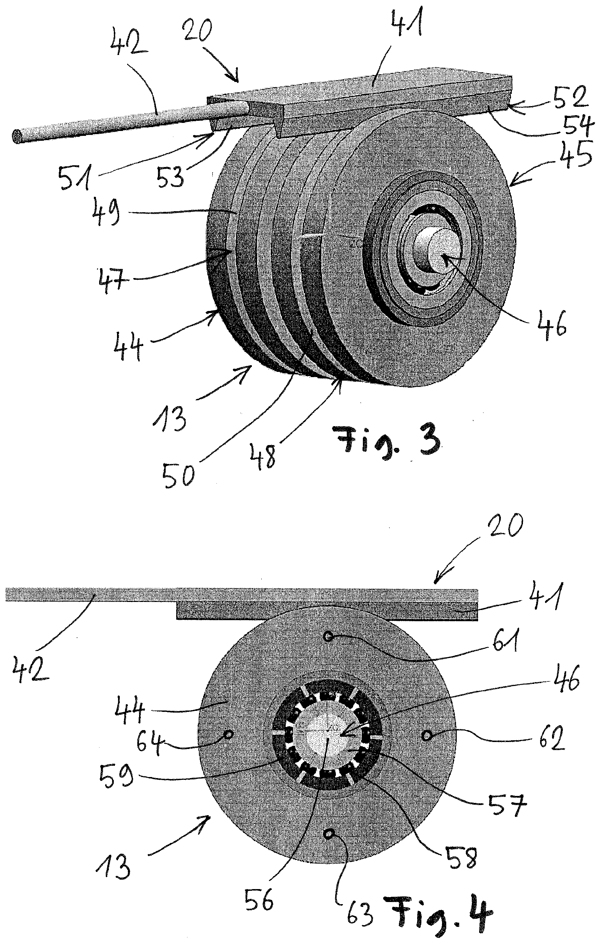

Figur 3, wobei noch Passungsfehler vorhanden sind;

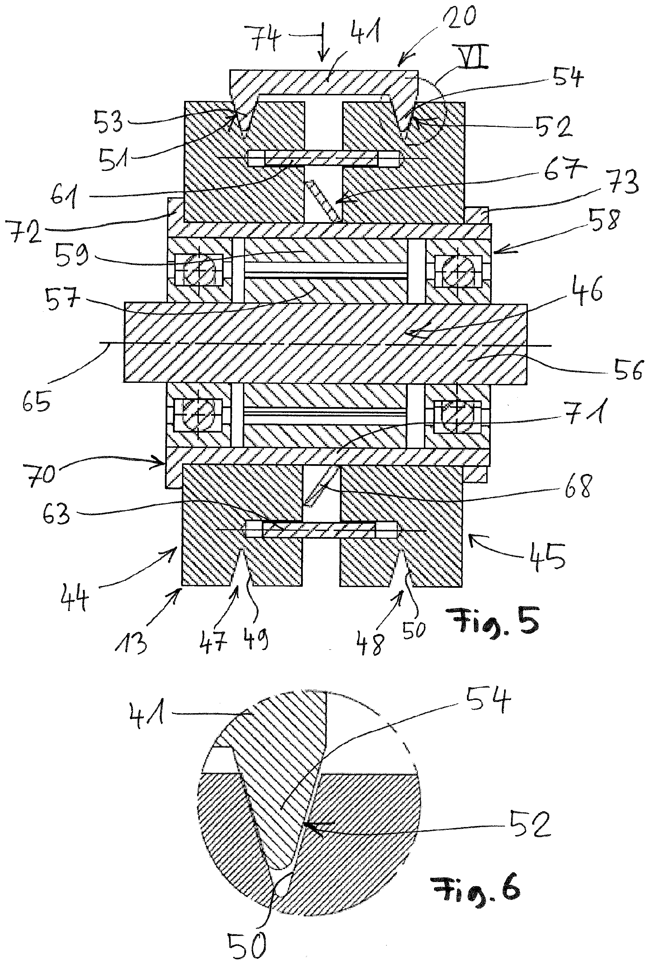

Figur 6 eine vergrößerte Darstellung einer Einzelheit VI aus Figur 5 zur Veranschaulichung eines Passungsfehlers;

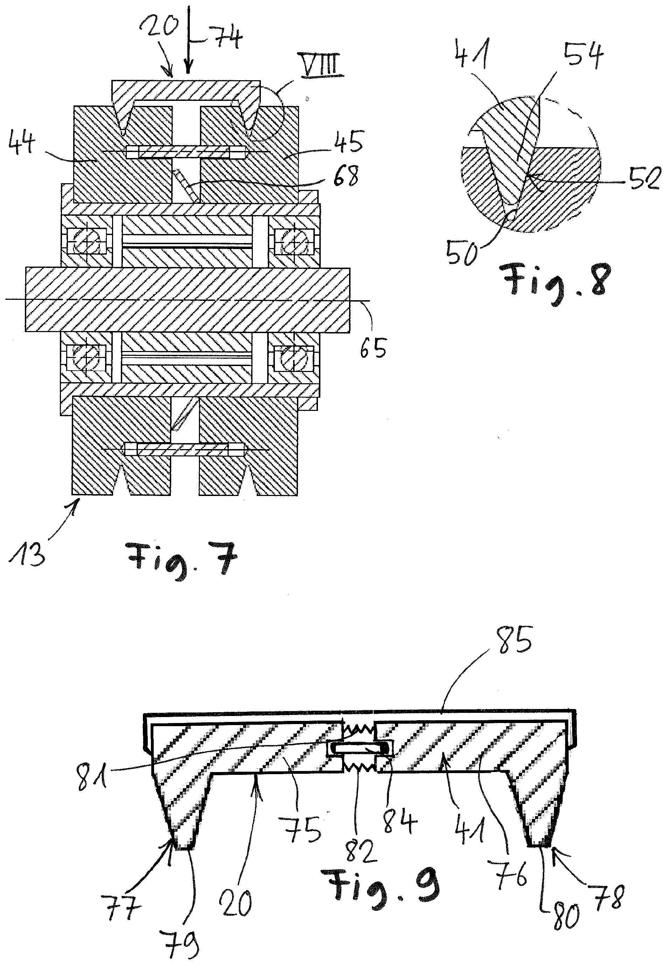

Figur 7 die gleiche Schnittansicht wie in Figur 5, wobei die Passungsfehler ausgeglichen sind;
Figur 8 eine vergrößerte Darstellung einer Einzelheit VIII aus Figur 7 zur Veranschaulichung des ausgeglichenen Passungsfehlers und
Figur 9 ein unterteiltes Eintreibelement im Querschnitt.

### Ausführungsbeispiele

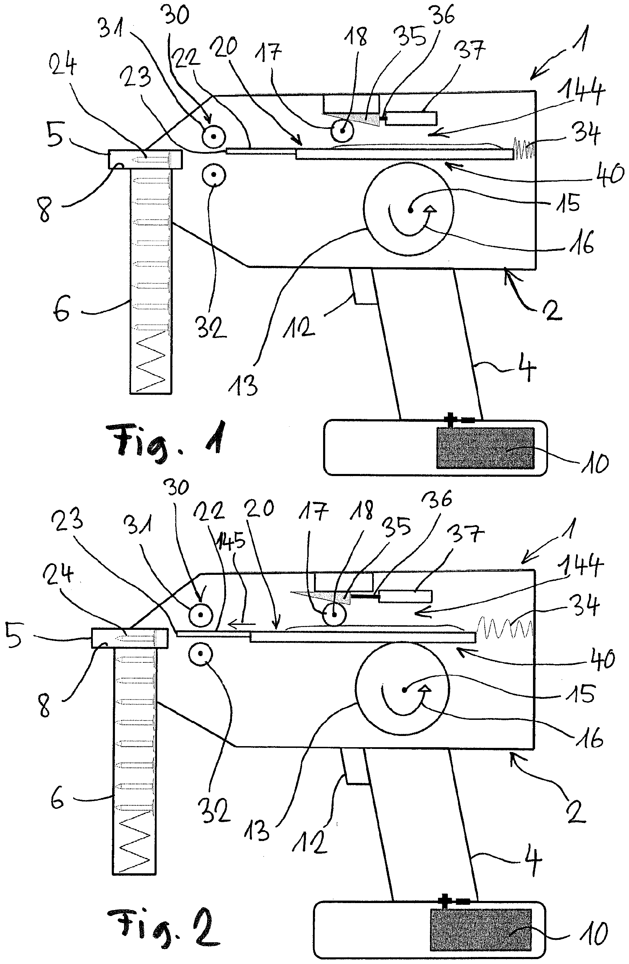

In den Figuren 1 und 2 ist ein schwungradangetriebenes Setzgerät 1 mit einem Gehäuse 2 vereinfacht dargestellt. Das Setzgerät 1 ist als handbetriebenes Setzgerät mit einem Handgriff 4 und einem Setzende 5 ausgeführt.

Das Setzgerät oder Setzwerkzeug 1 dient zum Eintreiben von Befestigungselementen 24 in einen (nicht dargestellten) Untergrund. Eine gewünschte Anzahl von Befestigungselementen 24 ist in einem Magazin 6 am Setzende 5 aufbewahrt. Aus dem Magazin 6 werden die Befestigungselemente 24, vorzugsweise automatisch, einzeln in einer Bolzenführung 8 bereitgestellt.

Die zum Eintreiben der Befestigungselemente 24 benötigte Energie wird zum Beispiel in Form von elektrischer Energie in einem Akkumulator 10 am unteren Ende des Handgriffs 4 bereitgestellt. Die in dem Akkumulator 10 gespeicherte elektrische Energie wird mit Hilfe eines (nicht dargestellten) Elektromotors, der vorteilhaft in ein Schwungrad 13 integriert ist, in Rotationsenergie umgewandelt.

Durch diese Rotationsenergie wird das Schwungrad 13 um eine Schwungraddrehachse 15 in Drehung versetzt, wie durch einen Pfeil 16 in den Figuren 1 und 2 angedeutet ist. Bei einer Betätigung eines Triggers oder Betätigungsknopfs 12 an dem Handgriff 4 wird eine in das Setzgerät 1 integrierte Kupplung, die zum Beispiel als Schrägradkupplung ausgeführt ist, so geschlossen, dass die in dem Schwungrad 13 gespeicherte Rotationsenergie zum Auslösen des Setzvorgangs als Translationsenergie auf ein Eintreibelement 20 übertragen wird.

Das Eintreibelement 20 stellt einen Setzkolben 22 dar, der verkürzt auch als Kolben bezeichnet wird. Der Setzkolben 22 beziehungsweise das Eintreibelement 20 ist zwischen dem Schwungrad 13 und einer Gegenrolle 17 angeordnet.

Die Gegenrolle 17 ist um eine Gegenrollendrehachse 18 drehbar, die parallel zur Schwungraddrehachse 15 angeordnet ist. Die Gegenrollen 17 stellt mit dem Schwungrad 13 und dem dazwischen angeordneten Eintreibelement 20 eine Kupplungseinrichtung 144 dar, die, wie im Folgenden noch erläutert wird, über einen Elektromagneten 37 betätigt wird.

Der Setzkolben 22 weist an seinem in den Figuren 1 und 2 linken Ende eine Kolbenspitze 23 auf, mit der das Befestigungselement 24 am Setzende 5 des Setzgeräts 1 in den (nicht dargestellten) Untergrund eintreibbar ist. Der Setzkolben 22 beziehungsweise das Eintreibelement 20 ist in dem Setzgerät 1 mit Hilfe mindestens einer Kolbenführung 30 in axialer Richtung, also in den Figuren 1 und 2 nach links und nach rechts, hin und her bewegbar geführt.

Die Kolbenführung 30 umfasst zwei Führungsrollen 31, 32. Zum Eintreiben des Befestigungselements 24 wird der Setzkolben 22 mit seiner Kolbenspitze 23 mit großer Beschleunigung durch die Kolbenführung 30 auf das Befestigungselement 24 zu bewegt. Nach einem Setzvorgang wird der Setzkolben 22 mit Hilfe einer Rückstellfeder 34 wieder zurück in seine in den Figuren 1 und 2 dargestellte Ausgangslage bewegt.

Die Kupplungseinrichtung 144 in dem Setzgerät 1 umfasst einen Keil 35, der mit einem Stößel 36 durch den Elektromagneten 37 bewegbar ist, um die Gegenrolle 17 in Figur 1 nach unten gegen das Eintreibelement 20 zu drücken. In Figur 1 ist das Setzgerät 1 vor einer Kupplungsauslösung dargestellt.

Figur 1 zeigt das Setzgerät 1 unmittelbar vor einem Setzvorgang. Das Schwungrad 13 wurde zum Beispiel durch einen integrierten bürstenlosen Elektromotor in Rotation versetzt und besitzt somit eine Energie in Form von Rotationsenergie, wie durch den Pfeil 16 in Figur 1 angedeutet ist.

In Figur 2 ist die Kupplungseinrichtung 144 über den Elektromagneten 37 so betätigt, dass das Eintreibelement durch die Gegenrolle 17 nach unten gegen das Schwungrad 13 gedrückt wird. Dadurch wird in einem Verbindungsbereich 40 ein Reibschluss zwischen dem Schwungrad 13 und dem Eintreibelement 20 hergestellt.

Der Reibschluss bewirkt, dass die durch den Pfeil 16 angedeutete Drehbewegung des Schwungrads 13 auf das Eintreibelement 20 übertragen wird, so dass dieses in einer durch einen Pfeil 145 angedeuteten Setzrichtung in Figur 2 nach links auf das Befestigungselement 24 in der Bolzenführung 8 zu bewegt wird. Sobald das Eintreibelement 20 mit der Kolbenspitze 23 auf das Befestigungselement 24 trifft, wird dieses am Setzende 5 des Setzgeräts 1 in den Untergrund eingetrieben.

In Figur 3 ist eine mehrteilige Ausführung des Schwungrads 13 mit dem Eintreibelement 20 perspektivisch dargestellt. Das Eintreibelement 20 umfasst einen Verbindungskörper 41 und einen Setzkörper 42. Der Setzkörper 42 stellt einen Setzkolben dar, mit welchem ein Setzelement oder Befestigungselement (24 in den Figuren 1 und 2) in einen Untergrund eintreibbar ist.

Der Verbindungskörper 41 ist bei dem dargestellten Ausführungsbeispiel einstückig mit dem Setzkörper 42 verbunden. Die Verbindung zwischen dem Setzkörper 42 und dem Verbindungskörper 41 kann aber auch anders ausgeführt werden, zum Beispiel durch einen Formschluss, insbesondere über ein Schraubgewinde. Der Verbindungskörper 41 dient zum Herstellen eines Reibschlusses zwischen dem Eintreibelement 20 und dem Schwungrad 13.

Das Schwungrad 13 ist in einen Schwungradteilkörper 44 und einen Schwungradteilkörper 45 unterteilt. Im dargestellten Ausführungsbeispiel stellen die Schwungradteilkörper 44, 45 zwei Schwungradhälften des Schwungrads 13 dar. Das mehrteilige Schwungrad 13 ist auf einem feststehenden Stator 46 eines Elektromotors, der in das Schwungrad 13 integriert ist, drehbar angeordnet.

Zur Verbesserung des Reibschlusses zwischen dem Schwungrad 13 und dem Eintreibelement 20 weisen die Schwungradteilkörper 44, 45 des Schwungrads 13 jeweils eine Reibschlussgeometrie 47, 48 auf. Die Reibschlussgeometrien 47, 48 sind als V-Nuten 49, 50 ausgeführt. Als V-Nut wird eine Ringnut bezeichnet, die einen V-förmigen Ringnutquerschnitt aufweist.

An dem Verbindungskörper 41 des Eintreibelements 20 sind komplementäre Reibschlussgeometrien 51, 52 ausgebildet. Die komplementären Reibschlussgeometrien 51, 52 umfassen Gegenkörper 53, 54, die reibschlüssig in die V-Nuten 49, 50 des Schwungrads 13 eingreifen.

Die Gegenkörper 53, 54 sind als Rippen mit einem V-förmigen Rippenquerschnitt ausgeführt, der zum Schwungrad 13 hin spitz zuläuft. Durch das Eingreifen der Gegenkörper 53, 54 in die V-Nuten 49, 50 kann die wirksame Reibfläche beim Herstellen des Reibschlusses zwischen dem Schwungrad 13 und dem Eintreibelement 20 wirksam vergrößert werden.

In der in Figur 4 dargestellten Schnittansicht sieht man, dass der Stator 46 eine Statorwelle 56 umfasst. Auf der Statorwelle 56 sind Spulenwicklungen einer Spule 57 aufgebracht, die ein wechselhaftes oder wechselndes Magnetfeld erzeugen und zusammen beziehungsweise in Wechselwirkung mit Permanentmagneten 59 eine Drehung des Schwungrads 13 verursachen. Die Statorwelle 56 ist fest in einem (nicht dargestellten) Gehäuse verankert. Die Schwungradteilkörper 44, 45 des Schwungrads 13 sind mit Hilfe von Kugellagern 58 relativ zu der Statorwelle 56 und der Spule 57 drehbar gelagert.

Durch Kreise 61 bis 64 sind in Figur 4 Kopplungselemente angedeutet, die dazu dienen, die beiden Schwungradteilkörper 44, 45 drehfest aber axial verlagerbar miteinander zu verbinden. Der Begriff axial bezieht sich auf eine Drehachse des Schwungrads 13.

In dem in Figur 5 dargestellten Längsschnitt durch die Statorwelle 56 ist die Drehachse des Schwungrads 13 mit 65 bezeichnet. In der Schnittansicht sieht man, dass die Schwungradteilkörper 44, 45 des Schwungrads 13 die Gestalt von Kreisringscheiben mit einem rechteckigen Ringquerschnitt aufweisen. Eine Federeinrichtung 67 ist in axialer Richtung zwischen den Schwungradteilkörpern 44, 45 eingespannt. Die Federeinrichtung 67 umfasst im dargestellten Ausführungsbeispiel eine Tellerfeder 68.

Durch eine Halteeinrichtung 70 sind die beiden durch die Tellerfeder 68 voneinander weg vorgespannten Schwungradteilkörper 44, 45 in axialer Richtung zusammengehalten. Die Halteeinrichtung 70 ist als Bundhülse 71 mit einem Bund 72 ausgeführt, der einen ersten axialen Anschlag für den Schwungradteilkörper 44 des Schwungrads 13 darstellt. Auf das dem Bund 72 abgewandte Ende der Bundhülse 71 ist eine Gewindemutter 73 aufgeschraubt, die einen zweiten axialen Anschlag für den Schwungradteilkörper 45 des Schwungrads 13 darstellt.

In Figur 5 sieht man, dass die als Kopplungsstifte ausgeführten Kopplungselemente 61 und 63 mit ihren Enden in als Sacklöcher ausgeführten Ausnehmungen der Schwungradteilkörper 44, 45 aufgenommen sind. Zwischen den Kopplungselementen 61. 63 und den Schwungradteilkörpern 44, 45 ist ausreichend Spiel vorhanden, um eine axiale Verlagerung der Schwungradteilkörper 44, 45 relativ zueinander zu ermöglichen. Das gleiche gilt für die Passungen zwischen den Schwungradteilkörpern 44, 45 und der Bundhülse 71.

In Figur 6 ist eine Einzelheit VI aus Figur 5 vergrößert dargestellt. In der vergrößerten Darstellung sieht man, dass eine in Figur 6 linke Flanke des Gegenkörpers 54 reibschlüssig mit der zugeordneten Nutflanke der V-Nut 50 verbunden ist. Zwischen der in Figur 6 rechten Flanke des Gegenkörpers 54 und der zugeordneten Nutflanke der V-Nut 50 ist noch ein fertigungsbedingtes Spiel vorhanden.

Die Schwungradteilkörper 44, 45, die auch als Schwungradscheiben bezeichnet werden, sind über eine (nicht dargestellte) Passfeder oder über eine Keilwellenverbindung mit der Bundhülse 71 drehfest verbunden, die auch als Axialhülse bezeichnet wird. Dadurch wird die Axialhülse oder Bundhülse 71 radial mit den Schwungradteilkörpern 44, 45 oder Schwungradhälften gekoppelt. Darüber hinaus sind die beiden Schwungradhälften oder Schwungradteilkörper 44, 45 über die Kopplungselemente oder Kopplungsstifte 61 bis 64, die auch als Radialstifte bezeichnet werden, verdrehsicher gekoppelt.

In axialer Richtung können sich die Schwungradhälften oder Schwungradteilkörper 44, 45 in einem gewissen Maß relativ zueinander bewegen oder verschieben. Der Schwungradteilkörper 44 ist in axialer Richtung zwischen dem Bund 72 der Bundhülse oder Axialhülse 71 und der Tellerfeder 68 eingespannt. Der Schwungradteilkörper beziehungsweise die Schwungradhälfte 45 ist in axialer Richtung zwischen der Tellerfeder 68 und der Gewindemutter 73 eingespannt.

In Figur 5 ist eine durch einen Pfeil 74 angedeutete Kraft von oben auf das Eintreibelement 20 noch zu gering, um, wie man in Figur 6 sieht, einen gewünschten Axialausgleich zu bewirken. Das führt dazu, dass nicht alle Flanken zum Reibschluss beitragen, was zu einem einseitigen und unerwünscht hohen Verschleiß führt.

In Figur 7 ist durch einen größeren Pfeil 74 angedeutet, dass eine größere Kraft von oben auf das Eintreibelement 20 wirkt. Durch die größere Kraft 74 kommt es zu einem gewünschten Axialausgleich, wobei die Tellerfeder 68 zusammengestaucht wird und sich eine der Schwungradhälften oder Schwungradteilkörper 44, 45 axial verschiebt oder verlagert.

In Figur 8 ist eine Einzelheit VIII aus Figur 7 vergrößert dargestellt. In der vergrößerten Darstellung sieht man, dass der gewünschte Axialausgleich dazu führt, dass alle Flanken der Reibpaarung zwischen dem Gegenkörper 54 und der V-Nut 50 zur Darstellung des Reibschlusses zwischen Schwungrad und Eintreibelement aneinander anliegen und somit gleichmäßig verschleißen.

In Figur 9 ist anhand eines stark vereinfachten Ausführungsbeispiels dargestellt, dass auch das Eintreibelement 20 mehrteilig ausgeführt sein kann, um einen gewünschten Axialausgleich im Betrieb des Setzgeräts zu ermöglichen. Das Eintreibelement 20 ist, wie man in dem in Figur 9 dargestellten Querschnitt durch das Eintreibelement 20 sieht, in zwei Eintreibelementteilkörper 75, 76 unterteilt.

Der in Figur 9 linke Eintreibelementteilkörper 75 ist mit einer komplementären Reibschlussgeometrie 77 ausgestattet, die der komplementären Reibschlussgeometrie 51 des in Figur 5 dargestellten Ausführungsbeispiels entspricht. Analog ist der in Figur 9 rechts dargestellte Eintreibelementteilkörper 76 mit einer komplementären Reibschlussgeometrie 78 ausgestattet, die der komplementären Reibschlussgeometrie 52 in Figur 5 entspricht. Die komplementären Reibschlussgeometrien 77, 78 sind als im Wesentlichen V-förmige Gegenkörper 79, 80 ausgeführt.

Die beiden Eintreibelementteilkörper 75, 76 stellen im dargestellten Ausführungsbeispiel Eintreibelementhälften dar. Die beiden Eintreibelementhälften 75, 76 sind durch zwei Federelemente 81, 82 voneinander weg vorgespannt. Durch ein Kopplungselement 84, das als Kopplungsstift ausgeführt ist, sind die beiden Eintreibelementteilkörper 75, 76 in axialer Richtung relativ zueinander verlagerbar geführt. Der Begriff axial bezieht sich auf die Drehachse des Schwungrads (13 in den Figuren 5 und 7) und bedeutet parallel zur Drehachse des Schwungrads.

Durch ein Halteelement 85 werden die beiden Eintreibelementteilkörper 75, 76 in axialer Richtung zusammengehalten. Das Eintreibelement 20 umfasst über seine Länge vorzugsweise mindestens zwei, insbesondere mehr als zwei, Kopplungselemente 84 und Halteelemente 85. Je nach Ausführung kann sich aber das Halteelement 85 auch über die gesamte oder einen Teil der Länge des Eintreibelements 20 erstrecken. Das gleiche gilt für das Kopplungselement 84, das auch als im Wesentlichen längliche Platte ausgeführt sein kann.

## Patentansprüche

1. Schwungradangetriebenes Setzgerät (1) mit einem Schwungrad (13), das antriebsmäßig mit einem Eintreibelement (20) verbindbar ist, um bei einem Setzvorgang mit dem Eintreibelement (20) ein Setzelement in einen Untergrund einzutreiben, wobei das Schwungrad (13) in mindestens zwei Schwungradteilkörper (44,45) unterteilt ist, die in einer axialen Richtung relativ zueinander begrenzt verlagerbar sind und **dadurch gekennzeichnet, dass** die mindestens zwei Schwungradteilkörper (44, 45) jeweils mindestens eine Reibschlussgeometrie (47,48) umfassen, die zur Darstellung eines Reibschlusses zwischen dem Schwungrad (13) und dem Eintreibelement (20) reibschlüssig mit einer komplementären Reibschlussgeometrie (51,52) des Eintreibelementes (20) verbindbar sind.

2. Schwungradangetriebenes Setzgerät nach Anspruch 1, **dadurch gekennzeichnet, dass** die Reibschlussgeometrie (47,48) eine im Wesentlichen V-förmige Nut (49,50) umfasst, die reibschlüssig mit einem komplementären Gegenkörper (53,54) des Eintreibelements (20) verbindbar ist.

3. Schwungradangetriebenes Setzgerät nach einem der vorhergehenden Ansprüche, **dadurch gekennzeichnet, dass** die Schwungradteilkörper (44,45) zwei Hälften des Schwungrads (13) sind.

4. Schwungradangetriebenes Setzgerät nach einem der vorhergehenden Ansprüche, **dadurch gekennzeichnet, dass** die Schwungradteilkörper (44,45) durch mindestens eine Federeinrichtung (67) voneinander weg vorgespannt sind.

5. Schwungradangetriebenes Setzgerät nach Anspruch 4, **dadurch gekennzeichnet, dass** die voneinander weg vorgespannten Schwungradteilkörper (44,45) in axialer Richtung durch eine Halteeinrichtung (70) zusammengehalten werden.

6. Schwungradangetriebenes Setzgerät nach einem der vorhergehenden Ansprüche, **dadurch gekennzeichnet, dass** die Schwungradteilkörper (44,45) durch Kopplungselemente (61-64), insbesondere Kopplungsstifte, drehfest, aber axial verlagerbar miteinander verbunden sind.

7. Schwungradangetriebenes Setzgerät nach einem der vorhergehenden Ansprüche, **dadurch gekennzeichnet, dass** das Eintreibelement (20) in mindestens zwei Eintreibelementteilkörper (75,76) unterteilt ist, die in einer axialen Richtung relativ zueinander begrenzt verlagerbar sind.

8. Schwungradangetriebenes Setzgerät nach einem der vorhergehenden Ansprüche, **dadurch gekennzeichnet, dass** das Eintreibelement (20) mindestens zwei komplementäre Reibschlussgeometrien (77,78) aufweist, die in einer axialen Richtung relativ zueinander begrenzt verlagerbar sind.

## Claims

1. Flywheel-driven setting device (1) comprising a flywheel (13), which can be drivingly connected to a driving-in element (20) in order for a setting element to be driven into a substrate by means of the driving-in element (20) during a setting process, wherein the flywheel (13) is subdivided into at least two flywheel parts (44, 45), which are movable relative to each other to a limited degree in an axial direction, and **characterized in that** the at least two flywheel parts (44, 45) respectively comprise at least one friction-fit geometry (47, 48), which can be frictionally connected to a complementary friction-fit geometry (51, 52) of the driving-in element (20) for forming a friction fit between the flywheel (13) and the driving-in element (20).

2. Flywheel-driven setting device according to Claim 1, **characterized in that** the friction-fit geometry (47, 48) comprises a substantially V-shaped groove (49, 50), which can be frictionally connected to a complementary counter-body (53, 54) of the driving-in element (20).

3. Flywheel-driven setting device according to either of the preceding claims, **characterized in that** the flywheel parts (44, 45) are two halves of the flywheel (13).

4. Flywheel-driven setting device according to one of the preceding claims, **characterized in that** the flywheel parts (44, 45) are biased away from each other by at least one spring device (67).

5. Flywheel-driven setting device according to Claim 4, **characterized in that** the flywheel parts (44, 45), which are biased away from each other, are held together in an axial direction by a holding device (70).

6. Flywheel-driven setting device according to one of the preceding claims, **characterized in that** the flywheel parts (44, 45) are connected to each other in a non-rotatable but axially movable way by coupling elements (61-64), in particular coupling pins.

7. Flywheel-driven setting device according to one of the preceding claims, **characterized in that** the driving-in element (20) is subdivided into at least two driving-in element parts (75, 76), which are movable relative to each other to a limited degree in an axial direction.

8. Flywheel-driven setting device according to one of the preceding claims, **characterized in that** the driving-in element (20) comprises at least two complementary friction-fit geometries (77, 78), which are movable relative to each other to a limited degree in an axial direction.

## Revendications

1. Appareil de pose (1) entraîné par volant d'inertie, comprenant un volant d'inertie (13), qui peut être relié en entraînement à un élément d'enfoncement (20), afin d'enfoncer un élément de pose dans un support avec l'élément d'enfoncement (20) lors d'une opération de pose, le volant d'inertie (13) étant divisé en au moins deux corps partiels de volant d'inertie (44, 45), qui sont déplaçables l'un par rapport à l'autre de manière limitée dans une direction axiale, **caractérisé en ce que** les au moins deux corps partiels de volant d'inertie (44, 45) comprennent chacun au moins une géométrie d'engagement par friction (47, 48), qui peut être reliée par friction à une géométrie d'engagement par friction complémentaire (51, 52) de l'élément d'enfoncement (20) pour la production d'un engagement par friction entre le volant d'inertie (13) et l'élément d'enfoncement (20).

2. Appareil de pose entraîné par volant d'inertie selon la revendication 1, **caractérisé en ce que** la géométrie d'engagement par friction (47, 48) comprend une rainure essentiellement en forme de V (49, 50), qui peut être reliée par friction à un contre-corps complémentaire (53, 54) de l'élément d'enfoncement (20).

3. Appareil de pose entraîné par volant d'inertie selon l'une quelconque des revendications précédentes, **caractérisé en ce que** les corps partiels de volant d'inertie (44, 45) sont deux moitiés du volant d'inertie (13).

4. Appareil de pose entraîné par volant d'inertie selon l'une quelconque des revendications précédentes, **caractérisé en ce que** les corps partiels de volant d'inertie (44, 45) sont précontraints à l'écart l'un de l'autre par au moins un appareil à ressort (67).

5. Appareil de pose entraîné par volant d'inertie selon la revendication 4, **caractérisé en ce que** les corps partiels de volant d'inertie (44, 45) précontraints à l'écart l'un de l'autre sont maintenus ensemble dans la direction axiale par un appareil de maintien (70).

6. Appareil de pose entraîné par volant d'inertie selon l'une quelconque des revendications précédentes, **caractérisé en ce que** les corps partiels de volant d'inertie (44, 45) sont reliés entre eux de manière immobile en rotation, mais déplaçable axialement, par des éléments d'accouplement (61-64), notamment des broches d'accouplement.

7. Appareil de pose entraîné par volant d'inertie selon l'une quelconque des revendications précédentes, **caractérisé en ce que** l'élément d'enfoncement (20) est divisé en au moins deux corps partiels d'élément d'enfoncement (75, 76), qui sont déplaçables l'un par rapport à l'autre de manière limitée dans une direction axiale.

8. Appareil de pose entraîné par volant d'inertie selon l'une quelconque des revendications précédentes, **caractérisé en ce que** l'élément d'enfoncement (20) comprend au moins deux géométries d'engagement par friction complémentaires (77, 78), qui sont déplaçables l'une par rapport à l'autre de manière limitée dans une direction axiale.
